# FASCICULE DE BREVET EUROPEEN

(11) **EP 0 961 029 B1**
(45) Date de publication et mention de la délivrance du brevet: **03.11.2004**
(21) Numéro de dépôt: 99401238.3
(22) Date de dépôt: 21.05.1999
(51) Int. Cl.: F02P 17/12, F02D 41/14, F02D 21/08, F02P 5/04

(54) **Procédé de contrôle moteur selon l'encrassement des bougies d'allumage et dispositif de mise en oeuvre**
Verfahren und Vorrichtung zur Steuerung des Betriebs einer Brennkraftmachine nach dem Verschmutzungsgrad der Zündkerzen
Control process for motor according to the degree of fouling of the spark plugs, and device therefor

(30) Priorité: 29.05.1998 FR 9806842
(43) Date de publication de la demande: 01.12.1999
(73) Titulaire: Renault s.a.s., 92100 Boulogne Billancourt (FR)
(72) Inventeur: Morillon, Eric, 92150 Suresnes (FR); Stauner, Daniel, 92290 Chatenay Malabry (FR)
(74) Mandataire: Srour, Elie

(56) Documents cités:
- EP-A- 0 801 368
- EP-A- 0 810 369
- DE-A- 4 330 619
- FR-A- 2 680 833
- US-A- 4 471 737
- US-A- 5 180 984

## Description

L'invention concerne un procédé de contrôle d'un moteur thermique de véhicule, automobile ou industriel, dont le système d'allumage avec bougies et l'injection de carburant sont pilotés électroniquement, à partir de la mesure de l'encrassement d'au moins une bougie d'allumage.

Une application particulièrement intéressante concerne les moteurs à injection directe, dont l'intérêt est d'apporter une plus grande souplesse des moteurs tout en améliorant la consommation. Cependant, cette injection directe de carburant peut provoquer un encrassement des bougies d'allumage dû à des combustions riches à faible puissance et faible température. Cet encrassement nuit à la qualité de la combustion du mélange air-carburant, pouvant entraîner un non respect des normes anti-pollution ainsi que de la nouvelle norme de diagnostic embarqué On Board Diagnostic II (O.B.D.II) destinée à informer le conducteur en cas de problème.

Le système d'allumage d'un moteur à combustion interne comprend une bobine d'allumage constituée d'un enroulement primaire et d'un enroulement secondaire et générant une haute tension, comprise entre 20 et 40 kilovolts, une bougie d'allumage par cylindre et éventuellement un ou plusieurs câbles de transmission de la haute tension. Une bougie d'allumage utilise le courant haute tension pour provoquer une étincelle, déclenchant la combustion du mélange air-carburant comprimé dans la chambre d'explosion de chaque cylindre par le piston. L'étincelle se produit entre les deux électrodes de la bougie, dont l'une est à un potentiel basse tension, voire la masse, et dont l'autre est reliée au générateur de haute tension.

Pour certains points de fonctionnement, la demande de tension peut nécessiter plus d'énergie que celle disponible sur la bobine, ou bien le mélange sera difficile à enflammer. Dans le cas de l'injection directe d'essence dans les cylindres permettant de réduire la consommation du moteur et la pollution, mais élargissant sa plage de fonctionnement et pouvant aboutir à des cas d'allumage difficile, des risques de combustions riches et surtout froides peuvent apparaître, ce qui provoque des dépôts conducteurs contenant beaucoup de carbone sur les électrodes de la bougie.

Au-delà d'une certaine épaisseur de dépôt, équivalent à une résistance électrique, la conductivité du dépôt est telle que la fuite d'énergie associée peut empêcher le démarrage de la combustion. C'est pourquoi il est intéressant de connaître l'ordre de grandeur de la résistance en formation entre les électrodes de chaque bougie, pour la détruire avant qu'elle ait une influence sur l'allumage et la combustion du mélange air-carburant.

Pour résoudre ce problème, il n'est pas envisageable de modifier l'organisation de la chambre de combustion ni sa gestion des flux thermiques, car on est limité par les hautes températures, dans le cas de l'injection directe d'essence, pour laquelle la plage de fonctionnement est très large et le motoriste préfère garder une grande liberté sur le dessin de la chambre pour optimiser la combustion.

Actuellement, pour pallier cet inconvénient d'encrassement des bougies, on modifie par exemple leur géométrie pour assurer le claquage de l'air entre les électrodes, ou bien on dessine des surfaces qui facilitent le claquage et nettoient le carbone déposé, ou bien on chauffe la bougie quand le moteur est froid et on la refroidit quand le moteur est chaud.

Une autre solution consiste à provoquer des allumages à temps de montée de la haute tension plus rapide mais elle use fortement les électrodes de la bougie par l'augmentation sensible du courant dans l'enroulement secondaire de la bobine.

Dans le document FR-A-2.680.833, il est décrit un procédé et un dispositif de détection de l'encrassement d'une bougie. Une telle détection peut servir à déclencher une stratégie de désencrassement qui permet de réduire l'encrassement détecté. Pour détecter un tel encrassement, le procédé décrit consiste à mesurer la résistance dynamique présentée au secondaire de la bobine d'allumage lors d'une étincelle. Selon la pente de la résistance dynamique, un signal d'encrassement est délivré.

Dans le document DE-A-43.30.619, il est décrit une unité de pilotage de l'angle d'allumage qui permet de désencrasser les bougies lors de la phase de chauffe du moteur, sans aucune détection de l'état de l'encrassement. L'angle d'allumage est déterminé pendant cette période de fonctionnement du moteur de sorte que des ondes sonores soient produites pour nettoyer la bougie possiblement encrassée.

L'invention vise plus particulièrement à mesurer l'encrassement des bougies d'allumage dû à un fonctionnement localement riche à faible température, à des fins de diagnostic en garage ou en laboratoire, ou dans le cadre très important de l'aide et de la signalisation au conducteur - On Board Diagnostic II-.

Ce diagnostic embarqué (OBD II) sur véhicule incite à installer ou à améliorer des dispositifs de surveillance du moteur, pour prévenir par exemple l'usure du pot catalytique. C'est pourquoi il serait particulièrement intéressant de connaître l'importance de l'encrassement des bougies.

Grâce à cette mesure de l'encrassement des bougies, le calculateur électronique de contrôle moteur peut modifier la combustion du mélange air-carburant par une nouvelle commande temporaire, dans le but de détruire une couche de carbone qui deviendrait trop gênante, sans changer la prestation au client.

L'invention propose un procédé de contrôle d'un moteur à combustion interne de véhicule automobile, dont le système d'allumage par bougies reliées à une bobine d'induction et l'injection de carburant dans les cylindres sont pilotés par un calculateur électronique, du type comportant :
- une phase de détection, par le calculateur, de l'encrassement d'au moins une bougie d'allumage et de comparaison de cet encrassement avec un seuil d'alerte déterminé, correspondant à une perte du courant secondaire, absorbé par l'encrassement de la bougie et qui manque lors de l'établissement de la haute tension dans l'enroulement secondaire de la bobine et ; au-delà d'un seuil d'alerte
- une phase de réduction de l'encrassement détecté au cours de laquelle le calculateur modifie temporairement la commande de l'avance à l'allumage et/ou le temps d'injection, sur le cylindre ou les cylindres associés aux bougies encrassées
caractérisé en ce que la détection de l'encrassement d'au moins une bougie d'allumage, dont une électrode est reliée à l'enroulement secondaire de la bobine d'induction, est réalisée par la mesure du courant secondaire (Is) circulant dans l'enroulement secondaire (Ls), effectuée pendant le temps de charge de l'enroulement primaire (Lp) de ladite bobine (1) et délivrant un signal représentatif de l'encrassement de la bougie. Un second objet de l'invention est un dispositif de mesure de l'encrassement d'une bougie d'un système d'allumage inductif d'un moteur à combustion interne commandé électroniquement, dont une électrode est reliée à l'enroulement secondaire d'une bobine d'induction, caractérisé en ce qu'il comporte un circuit de mesure du courant secondaire circulant dans l'enroulement secondaire, cette mesure étant effectuée pendant le temps de charge de l'enroulement primaire de la bobine et délivrant un signal représentatif de l'encrassement de la bougie.

D'autres caractéristiques et avantages de l'invention apparaîtront à la lecture de la description de plusieurs modes de réalisation, illustrée par les figures suivantes qui sont :
- figure 1 : un schéma électrique d'un système d'allumage classique ;
- figure 2 : un schéma électrique de principe d'un système d'allumage équipé d'un dispositif de mesure selon l'invention ;
- figures 3ₐ à 3_{d} : des exemples de réalisation d'un dispositif de mesure de l'encrassement d'une bougie d'allumage selon l'invention ;
- figure 4 : le signal délivré par le dispositif de mesure selon l'invention, en cas d'allumage sans combustion ni encrassement ;
- figure 5 : le signal délivré par le dispositif de mesure selon l'invention, en cas d'allumage avec combustion sans encrassement ;
- figure 6 : le signal délivré par le dispositif de mesure selon l'invention, en cas d'allumage avec encrassement sans combustion ;
- figure 7 : le signal délivré par le dispositif de mesure selon l'invention, en cas d'allumage avec combustion et encrassement .

Les éléments portant les mêmes références sur les différentes figures remplissent les mêmes fonctions en vue des mêmes résultats.

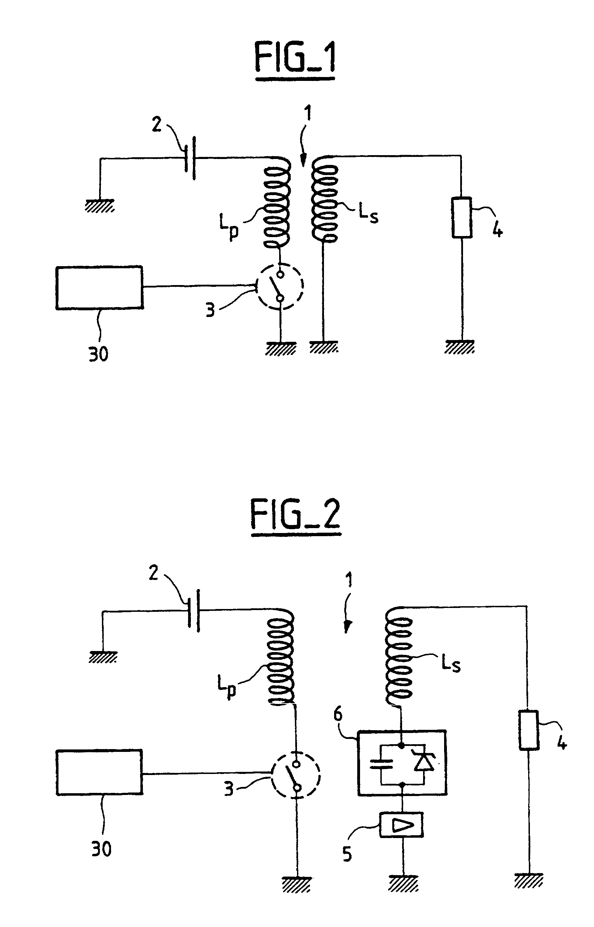

Selon un mode de réalisation classique d'un système d'allumage pour un moteur à combustion interne de véhicule, présenté par la figure 1, ce système comporte une bobine d'allumage 1 constituée de deux enroulements couplés, l'un primaire Lₚ et l'autre secondaire Lₛ. L'enroulement primaire Lₚ est relié d'un côté au pôle positif de la batterie 2 du véhicule délivrant une tension de 12 volts environ, et de l'autre côté à un calculateur d'allumage électronique 30 par l'intermédiaire d'un interrupteur 3, constitué par exemple par un transistor ou un I.G.B.T. (Insulated Gate Bipolar Transistor).

L'enroulement secondaire Lₛ est relié d'une part à une électrode d'une bougie 4 par un câble haute tension ou par une simple connexion, et d'autre part à la masse comme l'autre électrode de la bougie.

Ce système d'allumage, commandé par le calculateur d'allumage électronique, crée une étincelle aux bornes de la bougie affectée à chaque cylindre du moteur.

Le dispositif de mesure de l'encrassement d'une bougie selon l'invention, comprend un circuit 5 de mesure du courant Iₛ circulant dans l'enroulement secondaire Lₛ de la bobine 1 auquel il est connecté en série. Comme le montre la figure 2, le système d'allumage peut comprendre un circuit 6 de polarisation pour assurer la mesure du courant d'ionisation destiné à la détection des ratés de combustion.

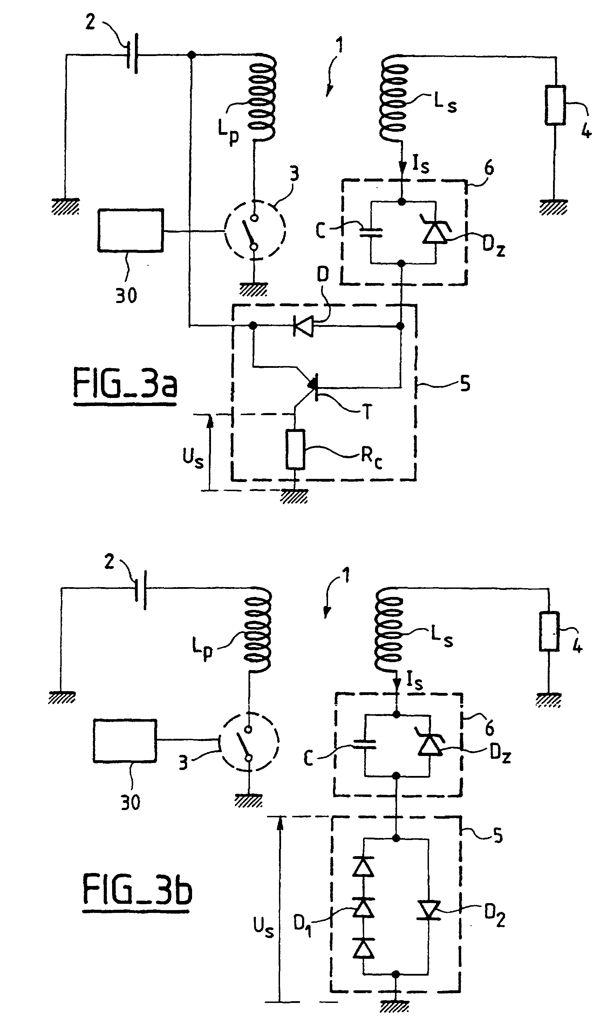

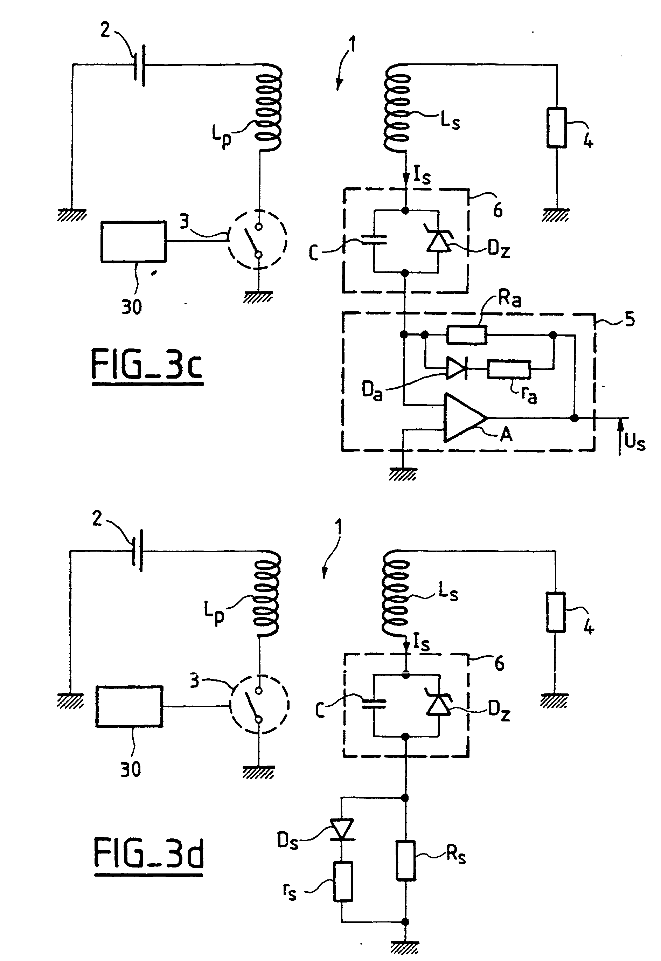

Les figures 3ₐ à 3_{d} sont quatre exemples de réalisation d'un dispositif de mesure d'encrassement selon l'invention.
Sur la figure 3ₐ, le circuit 5 de mesure du courant Iₛ dans l'enroulement secondaire Lₛ comprend un transistor T de type PNP, avec ou sans rétroaction, à gain limité ou pas.

L'émetteur du transistor est branché sur le pôle positif de la batterie 2, une diode D relie la base à l'émetteur pour la rétroaction et une résistance R_{c} au pied du collecteur sert à convertir le courant en signal de tension Uₛ plus facile à lire. Ce montage est intéressant pour sa simplicité, son faible coût, l'amplification du courant secondaire pour sa transmission et l'intégrabilité dans la bobine d'allumage.

La figure 3_{b} est un exemple d'un autre mode de réalisation du circuit 5 de mesure du courant secondaire constitué de deux séries de diodes tête-bêche D₁ et D₂, utilisées comme transformateur logarithmique courant-tension, permettant une mesure précise pour des valeurs faibles du courant et réaliste pour des valeurs fortes. Deux ou trois diodes D₁ peuvent être placées dans le sens de la mesure du courant, mises en parallèle avec une diode D₂ placée dans le sens de l'étincelle. Le signal de tension Uₛ lu aux bornes des diodes est presque logarithmique du courant secondaire. Pendant l'étincelle, on récupère en plus un signal de 0,6 volt. Ce montage est également intéressant pour sa simplicité et son intégrabilité dans la bobine d'allumage.

La figure 3_{c} est un exemple de circuit de mesure à amplificateur de courant A à rétroaction. La résistance Rₐ assurant la rétroaction de la sortie sur l'entrée peut permettre un gain différent selon que le courant secondaire Iₛ est positif ou négatif, fort ou faible, lorsqu'on lui ajoute en parallèle une diode Dₐ associée à une résistance rₐ.

Le schéma de la figure 3_{d} concerne le mode de réalisation le plus simple, comprenant une résistance Rₛ dimensionnée par le courant secondaire Iₛ de l'ordre de 100 mA, pour une réponse attendue de l'ordre de 10 volts, soit une résistance de 100 ohms.

Etant donné que, pendant la mesure de l'encrassement, la tension lue sera d'environ 1 volt pour une résistance d'encrassement de 100 kiloohms et que, pendant la combustion la tension lue sera inférieure à 1 millivolt correspondant à un courant secondaire de quelques micro-ampères, il est préférable de mettre une résistance de 1 à 100 kiloohms et de placer en parallèle une résistance rₛ de quelques dizaines d'ohms en série avec une diode Dₛ passante pendant l'étincelle.

Dans tous les montages précédents, un circuit 6 de mesure du courant d'ionisation pour la détection des ratés de combustion, est constitué par exemple d'une capacité C qui se charge à l'arrivée du front d'allumage et qui se décharge en cas de combustion, à l'arrêt de l'étincelle, et d'une diode Zéner D_{z} en parallèle avec la capacité C. Cette diode Zéner régule la quantité d'énergie stockée dans la capacité C, quelle que soit la valeur maximale du front d'allumage.

Les figures suivantes 4, 5, 6 et 7 sont des exemples de signaux lus aux bornes du circuit 5 de mesure de l'encrassement d'une bougie, soit le courant dans l'enroulement secondaire de la bobine en fonction du temps, le circuit secondaire comprenant un circuit 6 de mesure du courant d'ionisation entre l'enroulement Lₛ et le circuit 5.

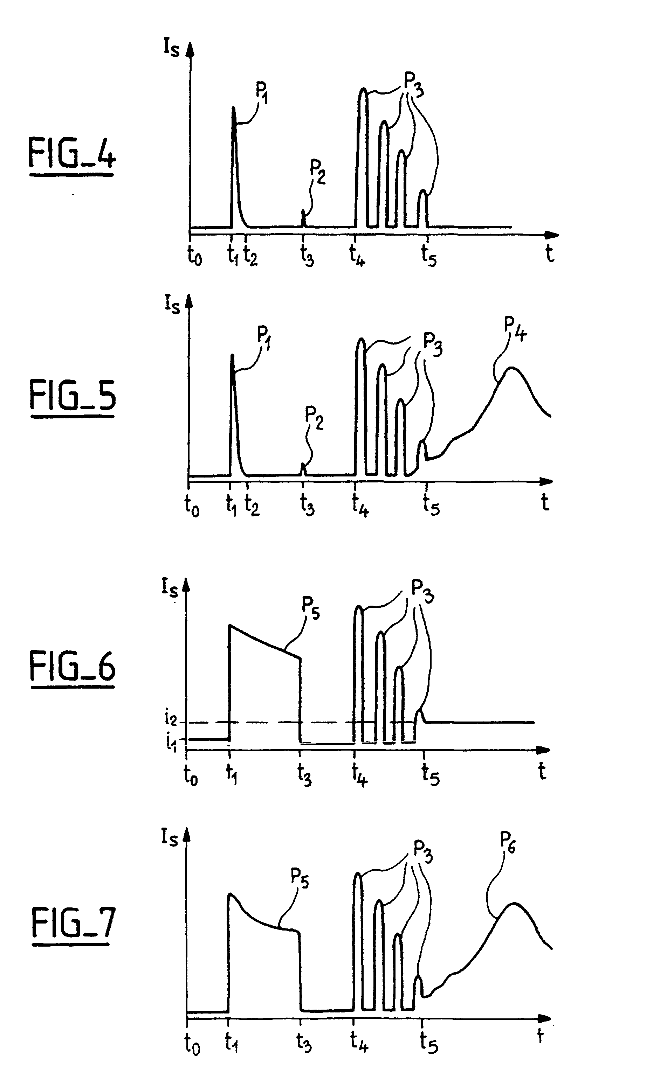

La figure 4 correspond au cas d'un allumage avec étincelle mais sans provoquer la combustion du mélange air-essence et sans encrassement de la bougie. Avant la charge de l'enroulement secondaire Lₛ, entre les instants t₀ et t₁, le signal est quasi nul. A l'instant t₁ de fermeture de l'interrupteur 3, la mise en conduction de l'enroulement primaire Lₚ génère une haute tension de l'ordre de 1 kilovolt sur l'enroulement secondaire Lₛ et commence alors la phase de charge de l'enroulement secondaire Lₛ jusqu'à l'instant t₃. La tension électrique qui s'établit sur cet enroulement Lₛ amène la circulation d'un courant qui charge les capacités présentes sur l'enroulement secondaire ( pic de courant P₁) jusqu'à l'instant t₂. Lorsque cette tension est établie, il n'y a plus de courant Iₛ dans l'enroulement secondaire, car le circuit est ouvert et le signal mesuré redevient nul. Lorsque l'on coupe brutalement le courant dans l'enroulement primaire Lₚ de la bobine à l'aide de l'interrupteur 3, à l'instant t₃, la tension aux bornes de l'enroulement secondaire Lₛ monte très vite au-delà de 10 kilovolts et l'air entre les électrodes de la bougie 4 devient conducteur. Cette variation rapide de tension génère une perturbation électromagnétique pouvant être captée par le circuit de mesure (pic P₂). L'étincelle s'entretient, un courant s'établit dans l'enroulement secondaire Lₛ qui charge le circuit 6 et traverse la diode D associée au transistor T. Ce dernier étant bloqué, le signal est nul.
Le courant Iₛ dans l'enroulement secondaire devient tellement faible que l'étincelle s'éteint. Le courant résiduel se met alors à osciller dans l'enroulement secondaire à partir de l'instant t₄, est redressé par le circuit 5 de mesure et on observe une phase constituée d'une série d'arches amorties P₃.
Puis le dispositif revient aux conditions initiales nulles à l'instant t₅.

Sur la figure 5 est représenté le signal aux bornes de la résistance R_{c} du circuit 5 de mesure selon le mode de réalisation de la figure 3ₐ, dans le cas d'un allumage avec combustion, mais sans encrassement de la bougie. Le fonctionnement du système d'allumage est le même que précédemment jusqu'à la fin de la phase où l'étincelle s'éteint créant des arches P₃ de courant résiduel. Lors de la phase qui suit l'étincelle de la bougie, le milieu entourant les électrodes de la bougie est devenu conducteur par création d'espèces ionisées due à la combustion. La bougie peut alors être assimilée à une résistance variable dans le temps, et la décharge du circuit 6 permet la circulation d'un courant d'ionisation, présentant un pic P₄ dans la phase débutant à partir de l'instant t₅ ; ce courant d'ionisation est mesuré aux bornes de la résistance R_{c} du circuit 5 de mesure.

La figure 6 correspond au cas d'un allumage avec étincelle mais sans provoquer la combustion du mélange air-essence et avec encrassement de la bougie. A partir de l'instant t₁ de mise en conduction de l'enroulement primaire Lₚ, la haute tension qui est générée sur l'enroulement secondaire Lₛ se retrouve aux bornes de la bougie 4 et sa résistance d'encrassement laisse passer un courant. Ce courant, figuré par un palier P₅ sur la figure 6 entre les instants t₁ et t₃, est détecté par le circuit 5 de mesure et est représentatif de l'encrassement de la bougie.

Dans le cas du mode de réalisation de la figure 3ₐ du dispositif de mesure de l'encrassement, le fait que l'émetteur du transistor T soit branché sur le pôle positif de la batterie 2 du véhicule provoque une circulation d'un courant i₁ par la bougie avant la phase de charge de l'enroulement secondaire. Mais ce courant étant mesuré pendant cette phase sous une tension voisine de 12 volts, il est cent fois plus faible que le courant mesuré pendant la charge sous une tension voisine de 1000 volts.
Enfin, à l'instant t₅ après les oscillations P₃, le circuit 6 de charge, lorsqu'il est présent, applique une tension d'une centaine de volts sur la bougie 4, entraînant l'apparition d'un courant i₂ qui est mesuré après les oscillations P₃. Ce signal est environ dix fois plus faible que le signal mesuré P₅ pendant la charge.

Dans le cas d'un allumage avec combustion du mélange et encrassement des bougies ( figure 7 ), le signal aux bornes de la résistance R_{c} du circuit 5 de mesure est identique à celui de la figure précédente jusqu'à l'instant t₅ de démarrage de la phase de combustion. Pendant cette phase, le courant P₆ mesuré est la somme des courants dus à la combustion et à l'encrassement.

Un tel dispositif de mesure de l'encrassement étant installé sur un ou plusieurs cylindres du moteur, le calculateur électronique de contrôle moteur est programmé pour réaliser une ou plusieurs mesures pendant le temps de charge de la bobine d'induction du circuit d'allumage. Tant que la ou les valeurs de l'encrassement des bougies restent inférieures à un premier seuil prédéfini, appelé seuil d'alerte, le calculateur optimise le fonctionnement du moteur selon sa stratégie de commande établie. Ce seuil d'alerte correspond à une perte du courant secondaire absorbé dans l'encrassement de la bougie et qui manque lors de l'établissement de la haute tension. La valeur du seuil d'alerte est comprise entre 0.1 et 1 mégohms, soit une résistance très perturbatrice pour l'allumage.

Par contre, si sur un ou plusieurs cycles du moteur, pendant un nombre de tours défini au-delà duquel le conducteur risque de percevoir une perturbation dans le fonctionnement du moteur, le calculateur détecte un encrassement de bougie supérieur au seuil d'alerte autorisé, il change sa stratégie de contrôle moteur, soit sur le ou les cylindres dont les bougies associées sont encrassées, soit sur l'ensemble des cylindres du moteur.

Les différents procédés de contrôle moteur appliqués par le calculateur électronique modifient temporairement la commande de l'avance à l'allumage et du temps d'injection dans le but de réduire, voire de supprimer, l'encrassement détecté.

Un premier exemple de procédé de contrôle consiste, en cas de détection d'un encrassement d'au moins une bougie d'allumage au-delà du seuil d'alerte, alors que le fonctionnement du moteur est commandé avec une richesse du mélange air-carburant voisine de 1 et supérieure à un premier seuil déterminé lors de la mise au point du moteur, le calculateur commande une réduction du temps d'injection destinée à diminuer la richesse.

Selon un autre procédé de contrôle, en cas de détection d'un encrassement d'au moins une bougie d'allumage au-delà du seuil d'alerte, alors que le fonctionnement du moteur est commandé avec une richesse du mélange air-carburant inférieure à un second seuil prédéterminé lors de la mise au point du moteur, le calculateur commande une augmentation du temps d'injection destinée à augmenter la richesse et la température de combustion.

Un troisième procédé de contrôle, en cas de détection d'un encrassement d'au moins une bougie d'allumage au-delà du seuil d'alerte, avec une richesse comprise entre 0.5 et 1, consiste en ce que le calculateur commande une augmentation de l'avance à l'allumage destinée à augmenter la température de combustion.

Selon un quatrième procédé de contrôle, en cas de détection d'un encrassement d'au moins une bougie d'allumage au-delà du seuil d'alerte, le calculateur commande une augmentation de la durée de charge de la bobine d'allumage destinée à augmenter le courant secondaire Iₛ dans l'enroulement secondaire Lₛ de la bobine.

Un cinquième procédé de contrôle est caractérisé en ce que, pour un moteur équipé d'une vanne de recirculation des gaz d'échappement, en cas de détection d'un encrassement d'au moins une bougie d'allumage au-delà du seuil d'alerte, alors que le moteur est en phase de démarrage avec une température d'air très basse, le calculateur commande une augmentation temporaire du taux de recirculation des gaz d'échappement, réinjectés chauds, destinée à augmenter la température du ou des cylindres concernés par l'encrassement.

Pour tous ces procédés de contrôle, après l'application d'une nouvelle commande du calculateur pour réduire l'encrassement d'au moins une bougie, le calculateur mesure cet encrassement et déclenche un signal d'alarme au conducteur du véhicule dans le cas où l'encrassement dépasse un deuxième seuil dit d'alarme supérieur au seuil d'alerte et compris entre 10 et 800 kiloohms.

## Revendications

1. Procédé de contrôle d'un moteur à combustion interne de véhicule automobile, dont le système d'allumage par bougies reliées à une bobine d'induction et l'injection de carburant dans les cylindres sont pilotés par un calculateur électronique, du type comportant :
- une phase de détection, par le calculateur, de l'encrassement d'au moins une bougie d'allumage et de comparaison de cet encrassement avec un seuil d'alerte déterminé, correspondant à une perte du courant secondaire, absorbé par l'encrassement de la bougie et qui manque lors de l'établissement de la haute tension dans l'enroulement secondaire de la bobine et ; au-delà d'un seuil d'alerte
- une phase de réduction de l'encrassement détecté au cours de laquelle le calculateur modifie temporairement la commande de l'avance à l'allumage et/ou le temps d'injection, sur le cylindre ou les cylindres associés aux bougies encrassées
**caractérisé en ce que** la détection de l'encrassement d'au moins une bougie d'allumage, dont une électrode est reliée à l'enroulement secondaire de la bobine d'induction, est réalisée par la mesure du courant secondaire (Is) circulant dans l'enroulement secondaire (Ls), effectuée pendant le temps de charge de l'enroulement primaire (Lp) de ladite bobine (1) et délivrant un signal représentatif de l'encrassement de la bougie.

2. Procédé de contrôle selon la revendication 1, **caractérisé en ce que**, en cas de détection d'un encrassement d'au moins une bougie d'allumage au-delà du seuil d'alerte, alors que le fonctionnement du moteur est commandé avec une richesse du mélange air-carburant supérieure à un premier seuil déterminé lors de la mise au point du moteur, le calculateur commande une réduction du temps d'injection destinée à diminuer la richesse.

3. Procédé de contrôle selon la revendication 1, **caractérisé en ce que**, en cas de détection d'un encrassement d'au moins une bougie d'allumage au-delà du seuil d'alerte, alors que le fonctionnement du moteur est commandé avec une richesse du mélange air-carburant inférieure à un second seuil déterminé lors de la mise au point du moteur, le calculateur commande une augmentation du temps d'injection destinée à augmenter la richesse et la température de combustion.

4. Procédé de contrôle selon la revendication 1, **caractérisé en ce que**, en cas de détection d'un encrassement d'au moins une bougie d'allumage au-delà du seuil d'alerte, avec une richesse comprise entre 0.5 et 1, le calculateur commande une augmentation de l'avance à l'allumage destinée à augmenter la température de combustion.

5. Procédé de contrôle selon la revendication 1, **caractérisé en ce que**, en cas de détection d'un encrassement d'au moins une bougie d'allumage au-delà du seuil d'alerte, le calculateur commande une augmentation de la durée de charge de la bobine d'allumage destinée à augmenter le courant secondaire (Is) dans l'enroulement secondaire (Ls) de la bobine.

6. Procédé de contrôle selon la revendication 1, **caractérisé en ce que**, pour un moteur équipé d'une vanne de recirculation des gaz d'échappement, en cas de détection d'un encrassement d'au moins une bougie d'allumage au-delà du seuil d'alerte, alors que le moteur est en phase de démarrage avec une température d'air très basse, le calculateur commande une augmentation temporaire du taux de recirculation des gaz d'échappement, réinjectés chauds, destinée à augmenter la température du ou des cylindres concernés par l'encrassement.

7. Procédé de contrôle selon l'une des revendications 2 à 6, **caractérisé en ce que**, après l'application d'une nouvelle commande du calculateur pour réduire l'encrassement d'au moins une bougie, le calculateur mesure cet encrassement et déclenche un signal d'alarme au conducteur du véhicule dans le cas où l'encrassement dépasse un deuxième seuil dit d'alarme supérieur au seuil d'alerte.

8. Dispositif de mesure de l'encrassement d'une bougie d'un système d'allumage inductif d'un moteur à combustion interne commandé électroniquement, dont une électrode est reliée à l'enroulement secondaire d'une bobine d'induction pour la mise en oeuvre du procédé de contrôle selon l'une des revendications 1 à 7, **caractérisé en ce qu'**il comporte un circuit (5) de mesure du courant secondaire (Is) circulant dans l'enroulement secondaire (Ls), et des moyens effectuant cette mesure pendant le temps de charge de l'enroulement primaire (Lp) de la bobine (1) et délivrant un signal représentatif de l'encrassement de la bougie.

9. Dispositif de mesure de l'encrassement d'une bougie selon la revendication 8, **caractérisé en ce que** le circuit (5) de mesure du courant secondaire (Is) circulant dans l'enroulement secondaire (Ls) est constitué par un transistor (T) de type PNP, à rétroaction, à gain limité ou pas, et **en ce que** l'émetteur du transistor est branché sur le pôle positif de la batterie (2) d'alimentation électrique du véhicule, une diode (D) relie la base à l'émetteur et une résistance (Rc) au pied du collecteur sert à convertir le courant en signal de tension (Us).

10. Dispositif de mesure de l'encrassement d'une bougie selon la revendication 8, **caractérisé en ce que** le circuit (5) de mesure du courant secondaire (Is) circulant dans l'enroulement secondaire (Lp) est constitué par de deux séries de diodes de tête-bêche (Dl et D2), utilisées comme transformateur logarithmique courant-tension, une série de diodes (D1) étant placées dans le sens de la mesure du courant, et mises en parallèle avec l'autre série de diodes (D2) placées dans le sens de l'étincelle.

11. Dispositif de mesure de l'encrassement d'une bougie selon la revendication 8, **caractérisé en ce que** le circuit (5) de mesure du courant secondaire (Is) circulant dans l'enroulement secondaire (Lp) est constitué par un amplificateur de courant (A) à rétroaction, une résistance (Ra) assurant la rétroaction de la sortie sur l'entrée et permettant, lorsqu'elle est montée en parallèle à une diode (Da) et une résistance (ra), un gain différent selon que le courant secondaire (Is) est positif ou négatif, fort ou faible.

12. Dispositif de mesure de l'encrassement d'une bougie selon la revendication 8, **caractérisé en ce que** le circuit (5) de mesure du courant secondaire (Is) circulant dans l'enroulement secondaire (Lp) est constitué par une résistance (Rs) dimensionnée par le courant secondaire (Is) en fonction d'une réponse prédéterminée.

13. Dispositif de mesure de l'encrassement d'une bougie selon l'une des revendications 8 à 12, **caractérisé en ce qu'**il comporte de plus un circuit (6) de charge pour la détection des ratés de combustion, connecté entre l'enroulement secondaire (Ls) de la bobine d'allumage (1) et le circuit (5) de mesure du courant (Is) dans l'enroulement secondaire.

14. Dispositif de mesure de l'encrassement d'une bougie selon la revendication 13, **caractérisé en ce que** le circuit (6) de charge pour la détection des ratés de combustion est constitué d'une diode Zéner (Dz) en parallèle avec une capacité (C), qui se décharge en cas de combustion.

## Claims

1. Control process for an internal combustion engine of a motor vehicle, in which the ignition system with spark plugs connected to an induction coil and the injection of fuel into the cylinders are controlled by an electronic control unit, of the sort comprising:
- a phase of detection by the control unit of the fouling of at least one spark plug and comparison of this fouling with a determined warning level, corresponding to a loss of the secondary current, which is absorbed by the fouling of the spark plug and is lacking when the high voltage is established in the secondary winding of the coil and; beyond a warning level
- a phase of reduction of the detected fouling during which the control unit temporarily modifies the spark advance command and/or the injection time, on the cylinder or cylinders associated with the fouled spark plugs
**characterized in that** detection of the fouling of at least one spark plug, one electrode of which is connected to the secondary winding of the induction coil, occurs by measurement of the secondary current (Is) circulating in the secondary winding (Ls), which occurs during the charging time of the primary winding (Lp) of said coil (1) and which delivers a signal representing the fouling of the spark plug.

2. Control process according to claim 1, **characterized in that** in the event of the detection of fouling of at least one spark plug beyond the warning level, when the operation of the engine is controlled with an air-fuel ratio that is above a first level determined during tuning of the engine, the control unit commands a reduction in the injection time designed to reduce the ratio.

3. Control process according to claim 1, **characterized in that** in the event of the detection of fouling of at least one spark plug beyond the warning level, when the engine operation is controlled with an air-fuel ratio that is below a second level determined during tuning of the engine, the control unit commands an increase in the injection time designed to increase the ratio and combustion temperature.

4. Control process according to claim 1, **characterized in that** in the event of the detection of fouling of at least one spark plug beyond the warning level, with a ratio comprised between 0.5 and 1, the control unit commands an increase in the spark advance designed to increase the combustion temperature.

5. Control process according to claim 1, **characterized in that** in the event of the detection of fouling of at least one spark plug beyond the warning level the control unit commands an increase in the charging time of the ignition coil designed to increase the secondary current (Iₛ) in the secondary winding (Lₛ) of the coil.

6. Control process according to claim 1, **characterized in that**, for an engine equipped with an exhaust gas recirculation valve, in the event of the detection of fouling of at least one spark plug beyond the warning level, when the engine is in starting phase with a very low air temperature, the control unit commands a temporary increase in the exhaust gas recirculation rate, fed back hot, designed to increase the temperature of the cylinder or cylinders affected by the fouling.

7. Control process according to any one of claims 2 to 6 **characterized in that** after the application of a new command from the control unit to reduce the fouling of at least one spark plug, the control unit measures this fouling and triggers a danger signal to the driver of the vehicle if the fouling exceeds a second level called the danger level, which is higher than the warning level.

8. Device for measurement of the fouling of a spark plug in an inductive ignition system of an electronically controlled internal combustion engine, one electrode of which is connected to the secondary winding of an induction coil in order to implement the control process according to any one of claims 1 to 7, **characterized in that** it comprises a circuit (5) for measuring the secondary current (Iₛ) circulating in the secondary winding (Lₛ), and means that carry out this measurement during the charging time of the primary winding (Lₚ) of the coil (1) and deliver a signal representing the fouling of the spark plug.

9. Spark plug fouling measurement device according to claim 8, **characterized in that** the circuit (5) for measurement of the secondary current (Iₛ) circulating in the secondary winding (Lₛ) is made up of a PNP type transistor (T) with feedback and limited or unlimited gain, and **in that** the emitter of the transistor is connected to the positive pole of the battery (2) supplying power to the vehicle, a diode (D) connects the base to the emitter and a resistor R_{c} at the bottom of the collector serves to convert the current into a voltage signal (Uₛ).

10. Spark plug fouling measurement device according to claim 8, **characterized in that** the circuit (5) for measurement of the secondary current (Iₛ) circulating in the secondary winding (Lₚ) is made up of two series of back-to-back diodes (D₁ and D₂), used as a logarithmic metering unit, a series of diodes (D1) being placed in the direction of the current measurement, and placed in parallel with the other series of diodes (D2) which are placed in the direction of the spark.

11. Spark plug fouling measurement device according to claim 8, **characterized in that** the circuit (5) for measurement of the secondary current (Iₛ) circulating in the secondary winding (Lₚ) is made up of a current feedback amplifier (A), a resistor (Rₐ) that provides the feedback of the output to the input and allows, when it is mounted in parallel with a diode (Da) and a resistor (ra), for a different gain depending on whether the secondary current (Iₛ) is positive or negative, strong or weak.

12. Spark plug fouling measurement device according to claim 8, **characterized in that** the circuit (5) for measurement of the secondary current (Iₛ) circulating in the secondary winding (Lₚ) is made up of a resistor (Rₛ) dimensioned by the secondary current (Iₛ) as a function of a predetermined response.

13. Spark plug fouling measurement device according to any one of claims 8 to 12, **characterized in that** it also comprises a load circuit (6) for detection of combustion misses, connected between the secondary winding (Lₛ) of the ignition coil (1) and the circuit (5) for measurement of the current (Iₛ) in the secondary winding.

14. Spark plug fouling measurement device according to claim 13, **characterized in that** the load circuit (6) for the detection of combustion misses is made up of a Zener diode (D_{z}) in parallel with a capacitor (C), which is discharged in the event of combustion.

## Patentansprüche

1. Verfahren zur Steuerung eines Verbrennungsmotors eines Kraftfahrzeugs, dessen System zur Zündung durch mit einer Induktionsspule verbundene Zündkerzen und die Einspritzung von Kraftstoff in die Zylinder durch einen elektronischen Rechner gesteuert werden, vom Typ der aufweist:
- eine Phase der Entdeckung, durch den Rechner, der Verschmutzung von mindestens einer Zündkerze und Vergleich dieser Verschmutzung mit einem vorbestimmten Warnschwellenwert, die einem Verlust an Sekundärstrom entspricht, der durch die Verschmutzung der Zündkerze absorbiert wird und der bei der Herstellung der Hochspannung in der Sekundärwicklung der Spule fehlt, und, ab einem Warnschwellenwert
- eine Phase der Verringerung der entdeckten Verschmutzung, im Lauf derer der Rechner zeitweise die Anweisung der Vorzündung und/oder die Zeit der Einspritzung für den Zylinder oder die Zylinder, die den verschmutzten Zündkerzen zugeordnet sind, modifiziert
**dadurch gekennzeichnet, dass** die Entdeckung der Verschmutzung von mindestens einer Zündkerze, von der eine Elektrode mit der Sekundärwicklung der Induktionsspule verbunden ist, durch die Messung des Sekundärstroms (Is), der in der Sekundärwicklung (Ls) fließt, realisiert wird, die während Zeit der Aufladung der Primärwicklung (Lp) der Spule (1) durchgeführt wird und ein für die Verschmutzung der Zündkerze repräsentatives Signal liefert.

2. Verfahren zur Steuerung gemäß Anspruch 1, **dadurch gekennzeichnet, dass** im Fall der Entdeckung einer Verschmutzung von mindestens einer Zündkerze über einen Warnschwellenwert hinaus, während der Betrieb des Motors mit einem Mischungsverhältnis des Luft-Kraftstoff Gemischs gesteuert wird, das höher ist, als ein erster bei der Einstellung des Motors bestimmter Schwellenwert, der Rechner eine Verkürzung der Einspritzzeit anordnet, die dazu bestimmt ist, das Mischungsverhältnis zu reduzieren.

3. Verfahren zur Steuerung gemäß Anspruch 1, **dadurch gekennzeichnet, dass** im Fall der Entdeckung einer Verschmutzung von mindestens einer Zündkerze über einen Warnschwellenwert hinaus, während der Betrieb des Motors mit einem Mischungsverhältnisses des Luft-Kraftstoff-Gemischs gesteuert wird, das niedriger ist, als ein erster bei der Einstellung des Motors bestimmter Schwellenwert, der Rechner eine Steigerung der Einspritzzeit anordnet, die dazu bestimmt ist, das Mischungsverhältnis und die Verbrennungstemperatur zu erhöhen.

4. Verfahren zur Steuerung gemäß Anspruch 1, **dadurch gekennzeichnet, dass** im Fall der Entdeckung einer Verschmutzung von mindestens einer Zündkerze über einen Warnschwellenwert hinaus, mit einem Mischungsverhältnis zwischen 0,5 und 1, der Rechner eine Zunahme der Vorzündung anordnet, die dazu bestimmt ist, die Verbrennungstemperatur zu erhöhen.

5. Verfahren zur Steuerung gemäß Anspruch 1, **dadurch gekennzeichnet, dass** im Fall der Entdeckung einer Verschmutzung von mindestens einer Zündkerze über einen Warnschwellenwert hinaus der Rechner eine Erhöhung der Dauer des Aufladens der Zündspule anordnet, die dazu bestimmt ist, den Sekundärstrom (Is) in der Sekundärwicklung (Ls) der Spule zu erhöhen.

6. Verfahren zur Steuerung gemäß Anspruch 1, **dadurch gekennzeichnet, dass**, für einen Motor, der mit einem Abgasrückführungsventil ausgestattet ist, im Fall der Entdeckung einer Verschmutzung von mindestens einer Zündkerze über einen Warnschwellenwert hinaus, während der Motor in einer Startphase mit einer sehr niedrigen Lufttemperatur ist, der Rechner eine temporäre Erhöhung des Grades an Rückführung der Abgase, heiß wieder eingeblasen, anordnet, die dazu bestimmt ist, die Temperatur des oder der von der Verschmutzung betroffenen Zylinder zu erhöhen.

7. Verfahren zur Steuerung gemäß einem der Ansprüche 2 bis 6, **dadurch gekennzeichnet, dass** nach der Anwendung einer neuen Anweisung des Rechners zur Verringerung der Verschmutzung von mindestens einer Zündkerze der Rechner diese Verschmutzung misst und ein Alarmsignal an den Fahrer des Fahrzeugs auslöst, im dem Fall, dass die Verschmutzung einen zweiten sogenannten Alarmschwellenwert überschreitet, der höher ist, als der Wamschwellenwert.

8. Vorrichtung zur Messung der Verschmutzung einer Zündkerze eines Systems zur induktiven Zündung eines Verbrennungsmotors, elektronisch gesteuert, bei der eine Elektrode mit der Sekundärwicklung einer Induktionsspule verbunden ist zur Durchführung des Verfahrens zur Steuerung gemäß einem der Ansprüche 1 bis 7, **dadurch gekennzeichnet, dass** sie eine Schaltung (5) zur Messung des Sekundärstroms (Is) aufweist, der in der Sekundärwicklung (Ls) fließt, und Mittel, die während der Zeit der Aufladung der Primärwicklung (Lp) der Spule (1) diese Messung durchführen und ein Signal liefern, das repräsentativ ist für die Verschmutzung der Zündkerze.

9. Vorrichtung zur Messung der Verschmutzung einer Zündkerze gemäß Anspruch 8, **dadurch gekennzeichnet, dass** die Schaltung (5) zur Messung des Sekundärstroms (Is), der in der Sekundärwicklung (Ls) fließt, aus einem Transistor (T) vom Typ PNP besteht, mit Rückkopplung, mit begrenzter Verstärkung oder nicht, und dadurch, dass der Emitter des Transistors am positiven Pol der Batterie zur elektrischen Versorgung des Fahrzeugs (2) angeschlossen ist, eine Diode (D) die Basis mit dem Emitter verbindet und ein Widerstand (Rc) am Fuß des Kollektors dazu dient, den Strom in ein Spannungssignal (Us) umzuwandeln.

10. Vorrichtung zur Messung der Verschmutzung einer Zündkerze gemäß Anspruch 8, **dadurch gekennzeichnet, dass** die Schaltung (5) zur Messung des sekundären Stroms (Is), der in der Sekundärwicklung (Lp) fließt, aus zwei Folgen von gegenläufigen Dioden (D1 und D2) besteht, die als logarithmischer Strom-Spannung Wandler verwendet werden, wobei eine Folge (D1) von Dioden in der Messrichtung des Stroms angeordnet ist und parallel zur anderen Folge von Dioden (D2) geschaltet ist, die in der Richtung des Funkens angeordnet ist.

11. Vorrichtung zur Messung der Verschmutzung einer Zündkerze gemäß Anspruch 8, **dadurch gekennzeichnet, dass** die Schaltung (5) zur Messung des sekundären Stroms (Is), dier in der Sekundärwicklung (Lp) fließt, aus einem Rückkopplungs-Stromverstärker (A) besteht, wobei ein Widerstand (Ra) die Rückkopplung des Ausgangs auf den Eingang gewährleistet und, wenn er parallel zu einer Diode (Da) und einem Widerstand (ra) geschaltet ist, eine unterschiedliche Verstärkung erlaubt, stark oder schwach, je nachdem ob der Sekundärstrom (Is) positiv oder negativ ist.

12. Vorrichtung zur Messung der Verschmutzung einer Zündkerze gemäß Anspruch 8, **dadurch gekennzeichnet, dass** die Schaltung (5) zur Messung des sekundären Stroms (Is), der in der Sekundärwicklung (Lp) fließt, aus einem Widerstand (Rs) besteht, der für den Sekundärstrom (Is) dimensioniert ist, in Abhängigkeit von einer vorbestimmten Antwort.

13. Vorrichtung zur Messung der Verschmutzung einer Zündkerze gemäß einem der Ansprüche 8 bis 12, **dadurch gekennzeichnet, dass** sie darüber hinaus eine Schaltung (6) aufweist, mit der Aufgabe der Entdeckung von Fehlzündungen, angeschlossen zwischen der Sekundärwicklung (Ls) der Zündspule (1) und der Schaltung (5) zur Messung des Stroms (Is) in der Sekundärwicklung.

14. Vorrichtung zur Messung der Verschmutzung einer Zündkerze gemäß Anspruch 13, **dadurch gekennzeichnet, dass** die Schaltung (6) mit der Aufgabe der Entdeckung von Fehlzündungen aus einer Zenerdiode (Dz) parallel zu einer Kapazität (C) besteht, die sich im Fall der Zündung entlädt.
